# EUROPEAN PATENT APPLICATION

(11) **EP 4 852 578 A1**
(43) Date of publication of application: **09.12.2026**
(21) Application number: 24921027.9
(22) Date of filing: 02.02.2024
(51) Int. Cl.: H04W 72/21

(54) **METHOD AND APPARATUS FOR REPORTING CHANNEL STATE INFORMATION OR METHOD AND APPARATUS FOR RECEIVING CHANNEL STATE INFORMATION, AND COMMUNICATION SYSTEM**

(71) Applicant: 1FINITY INC., Kawasaki-shi, Kanagawa 211-8588 (JP)
(72) Inventor: LU, Yiwen, Beijing 100022 (CN); ZHANG, Jian, Beijing 100022 (CN); WANG, Guotong, Beijing 100022 (CN); ZHAO, Di, Beijing 100022 (CN)
(74) Representative: Haseltine Lake Kempner LLP
(86) International application number: PCT/CN2024/075585
(87) International publication number: WO 2025/160973

(57) **Abstract**

Embodiments of the present disclosure provide a method and an apparatus for reporting or receiving channel state information, and a communication system. The method for reporting channel state information comprises: receiving a channel state information reference signal resource configuration, the channel state information reference signal resource configuration corresponding to X channel state information reference signal resource sets for time-frequency information tracking, each of the channel state information reference signal resource sets comprising at least one tracking reference signal resource, where X is an integer greater than or equal to 1; and reporting multi-point joint transmission-based channel state information according to the tracking reference signal resource.

## Description

### FIELD

Embodiments of the present disclosure relate to the technical field of communications.

### BACKGROUND

In a New Radio (NR) system, a user may measure a current channel according to a channel state information (CSI) resource setting and a CSI report setting configured by a base station side, and report feedbacks by carrying CSI by Uplink Control Information (UCI) in an uplink channel (e.g., a Physical Uplink Control Channel (PUCCH) or a Physical Uplink Shared Channel (PUSCH)).

Multiple-transmission reception point (M-TRP) coordinated transmission scheme is an important technology for improving cell-edge throughput and providing more balanced quality of service for serving cells, in NR systems. The M-TRP transmission scheme may be roughly divided into two types: a Coherent Joint Transmission (C-JT) scheme and a Non-Coherent Joint Transmission (NC-JT) scheme.

It should be noted that the above introduction to the technical background is just to facilitate a clear and complete description of technical solutions of the present disclosure, and is elaborated to facilitate understanding of those skilled in the art. It should not be considered that the technical solutions are known by those skilled in the art just because these solutions are elaborated in Background of the present disclosure.

### SUMMARY

It was found by the inventors that in existing transmission schemes, by taking a C-JT scheme as an example, this scheme only considers data and/or reference signal transmission under ideal scenarios (e.g., ideal backhaul and ideal synchronization, etc.). However, in real-world scenarios, geographic locations of different transmission points result in larger discrepancies in delay transmission characteristics and frequency offset characteristics among different transmission points, thereby signals are unable to achieve fully synchronous transmission and are unable to achieve ideal coherent transmission when channels of different signals are superimposed according to different delays and frequency offsets. Current precoding and CSI feedback are completely unable to reflect this problem.

In addition, non-ideal backhaul caused by radio frequency units of different transmission points may also cause generation of delays and asynchronization in backhaul between different transmission points and a central processing unit (CU). Consequently, even in enhanced CSI feedback, CSI information fed back by a user equipment (UE) is still unable to accurately and completely reflect a real channel state and quality experienced by resource ports of C-JT, thereby reducing accuracy and reliability of data scheduling, leading to degraded data transmission performance, and a decrease in single-user and network overall throughput.

For at least one of the above problems or other similar problems, embodiments of the present disclosure provide a method and an apparatus for reporting or receiving channel state information, and a communication system.

According to one aspect of embodiments of the present disclosure, an apparatus for reporting channel state information is provided, configured in a terminal equipment, the apparatus including: a receiving unit configured to receive a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and a processing unit configured to report multi-point joint transmission-based channel state information according to the tracking reference signal resource.

According to another aspect of embodiments of the present disclosure, a method for reporting channel state information is provided, applicable to a terminal equipment, the method including: receiving a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and reporting multi-point joint transmission-based channel state information according to the tracking reference signal resource.

According to another aspect of embodiments of the present disclosure, an apparatus for receiving channel state information is provided, configured in a network device, the apparatus including: a transmitting unit configured to transmit a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and a receiving unit configured to receive multi-point joint transmission-based channel state information.

According to another aspect of embodiments of the present disclosure, a method for receiving channel state information is provided, applicable to a network device, the method including: transmitting a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and receiving multi-point joint transmission-based channel state information.

According to another aspect of embodiments of the present disclosure, a communication system is provided, including a network device and a terminal equipment, wherein the network device transmits a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and receives multi-point joint transmission-based channel state information; and the terminal equipment receives the channel state information reference signal resource configuration, and reports the channel state information based on the tracking reference signal resource.

One of advantageous effects of embodiments of the present disclosure is that: a terminal equipment is able to report multi-point joint transmission-based channel state information according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

Referring to later descriptions and drawings, specific implementations of the present disclosure are disclosed in detail, indicating modes in which principles of the present disclosure may be adopted. It should be understood that implementations of the present disclosure are not limited in scope thereby. Within scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that the term "comprises/comprising/includes/including" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of a communication system in embodiments of the present disclosure;
FIG. 2 is a schematic diagram of a transmission scheme;
FIG. 3 is a schematic diagram of a method for reporting channel state information in embodiments of the present disclosure;
FIG. 4 is a schematic diagram of a resource configuration in embodiments of the present disclosure;
FIG. 5 is another schematic diagram of a resource configuration in embodiments of the present disclosure;
FIG. 6 is another schematic diagram of a resource configuration in embodiments of the present disclosure;
FIG. 7 is another schematic diagram of a resource configuration in embodiments of the present disclosure;
FIG. 8 is another schematic diagram of a resource configuration in embodiments of the present disclosure;
FIG. 9 is another schematic diagram of a resource configuration in embodiments of the present disclosure;
FIG. 10 is a schematic diagram of an apparatus for reporting channel state information report in embodiments of the present disclosure;
FIG. 11 is a schematic diagram of a method for receiving channel state information in embodiments of the present disclosure;
FIG. 12 is a schematic diagram of an apparatus for receiving channel state information in embodiments of the present disclosure;
FIG. 13 is a schematic diagram of a network device in embodiments of the present disclosure;
FIG. 14 is a schematic diagram of a terminal equipment in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations in which principles of the present disclosure may be adopted. It should be understood that the present disclosure is not limited to described implementations, in contrast, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, term "communication network" or "wireless communication network" may refer to a network conforming to any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol of any stage, which e.g. may include but be not limited to the following communication protocols: 1G (generation), 2G, 2.5G, 2.75G, 3G, 4G, 4.5G, 5G, New Radio (NR), 6G and so on, and/or other communication protocols that are currently known or will be developed in future.

In embodiments of the present disclosure, term "network device" e.g. refers to a device configured to access a terminal equipment to a communication network in a communication system and provide services for the terminal equipment. The network device may include but be not limited to the following devices: a Base Station (BS), an Access Point (AP), a Transmission Reception Point (TRP) (a transceiver node), a Transmission Point (TP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femto, pico, etc.). And term "base station" may include some or all functions thereof, and each base station may provide communication coverage to a specific geographic region. Term "cell" may refer to a base station and/or a coverage area thereof, which depends on a context in which this term is used.

In embodiments of the present disclosure, term "User Equipment (UE)" e.g. refers to a device configured to access a communication network and receive network services via a network device, or may also be called "a Terminal Equipment (TE)". The terminal equipment may be fixed or mobile, and may also be called a Mobile Station (MS), a terminal, a subscriber, a Subscriber Station (SS), an Access Terminal (AT), a station, a Mobile Termination (MT) and so on.

A terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under scenarios such as Internet of Things (IoT), the terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, term "network side" or "network device side" refers to a side of a network, may be a certain base station, or may include one or more of the above network devices. Term "user side" or "terminal side" or "terminal equipment side" refers to a side of a user or terminal, may be a certain UE, or may include one or more of the above terminal equipments. Unless otherwise specified herein, "device" may refer to a network device, or may refer to a terminal equipment.

In the following descriptions, without causing confusion, terms "uplink control signal" and "Uplink Control Information (UCI)" or "Physical Uplink Control Channel (PUCCH)" are interchangeable, and terms "uplink data signal" and "uplink data information" or "Physical Uplink Shared Channel (PUSCH)" are interchangeable.

Terms "downlink control signal" and "Downlink Control Information (DCI)" or "Physical Downlink Control Channel (PDCCH)" are interchangeable, and terms "downlink data signal" and "downlink data information" or "Physical Downlink Shared Channel (PDSCH)" are interchangeable.

In addition, an uplink signal may include an uplink data signal and/or an uplink control signal and/or a PRACH and/or an SRS, etc., and may also be called an uplink transmission (UL transmission) or uplink information or an uplink channel. Transmitting/receiving an uplink transmission on an uplink resource may be understood as transmitting/receiving the uplink transmission by using the uplink resource. A downlink signal may include a downlink data signal and/or a downlink control signal and/or a synchronization signal (SS, e.g., a PSS/an SSS) and/or a broadcast channel (PBCH) and/or an SSB (SS/PBCH block, including a PSS, an SSS and a PBCH and a DMRS thereof) and/or a CSI-RS, etc., and may also be called a downlink transmission (DL transmission) or downlink information or a downlink channel. Transmitting/receiving a downlink transmission on a downlink resource may be understood as transmitting/receiving the downlink transmission by using the downlink resource. In embodiments of the present disclosure, higher-layer signaling may be e.g. radio resource control (RRC) signaling; the RRC signaling includes e.g., an RRC message, for example includes a broadcast/common RRC message/signaling (e.g., a master information block (MIB), system information), and a dedicated RRC message/signaling; or an RRC information element (RRC IE); or an information field included by an RRC message or an RRC information element (or an information field included by an information field). The high-layer signaling, for example, may further be Medium Access Control (MAC) signaling; or called a MAC control element (MAC CE). However, the present disclosure is not limited thereto.

In embodiments of the present disclosure, "multiple/a plurality of" refers to at least two, or two or more.

In embodiments of the present disclosure, "predefine" refers to being specified by a protocol or being determined according to rules specified by a protocol, without requiring additional configuration. "Configure/indicate" refers to being directly or indirectly configured/indicated by a network device via higher-layer signaling and/or physical layer signaling. Configuration/indication may be performed by introducing higher-layer parameters in higher-layer signaling, the higher-layer parameters referring to information fields and/or information elements (IEs)/information units/information atoms in higher-layer signaling. Physical layer signaling may be e.g., control information carried by a physical downlink control channel (DCI), or control information carried by a sequence, but is not limited thereto.

For ease of description, the following text will take a base station as an example of an access network device for description. In the following descriptions, without causing confusion, "if...", "in a case where..." and "when..." may be used interchangeably.

Scenarios of embodiments of the present disclosure are described below through examples; however, the present disclosure is not limited thereto.

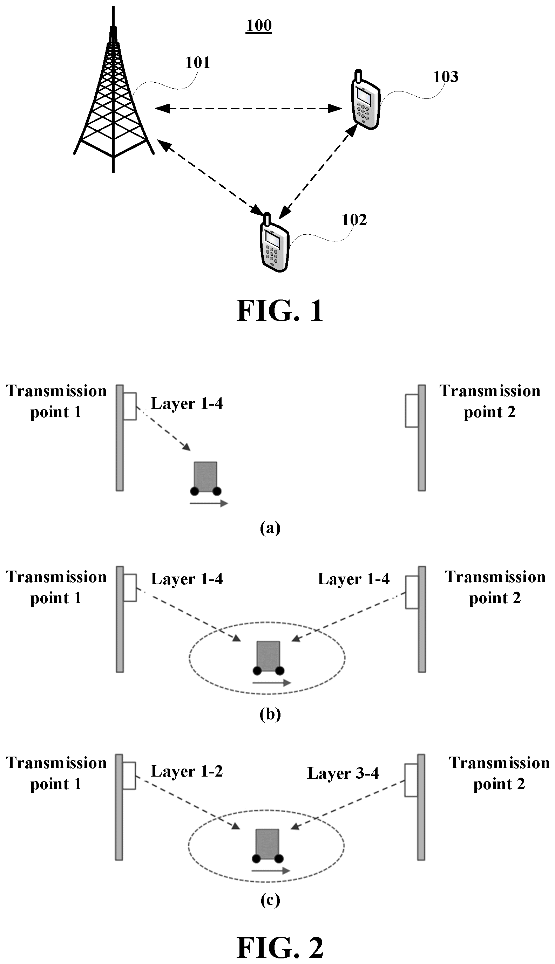

FIG. 1 is a schematic diagram of a communication system in embodiments of the present disclosure, schematically describing a situation by taking a terminal equipment and a network device as an example, and as shown in FIG. 1, a communication system 100 may include a network device 101 and terminal equipments 102, 103. For simplicity, FIG. 1 only takes two terminal equipments and one network device as an example for description, however embodiments of the present disclosure are not limited thereto.

In embodiments of the present disclosure, transmission of existing services or future implementable services may be performed between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

The terminal equipment 102 may transmit data to the network device 101, for example using a grant-based or grant-free transmission mode. The network device 101 may receive data transmitted by one or more terminal equipments 102, and feed back information to terminal equipment(s)102, such as acknowledgment ACK/ non-acknowledgment ACK information, etc., and terminal equipment(s) 102 may acknowledge end of a transmission process, or may further perform new data transmission, or may perform data retransmission, according to feedback information.

It is worth noting that FIG. 1 shows that two terminal equipments 102 and 103 are all within a coverage range of the network device 101, however the present disclosure is not limited thereto. Two terminal equipments 102 and 103 may be not within a coverage range of the network device 101, or one terminal equipment 102 is within the coverage range of the network device 101 while the other terminal equipment 103 is outside the coverage range of the network device 101.

The following describes terms involved in the present disclosure, but the following explanations are not construed as limiting embodiments of the present disclosure.

In embodiments of the present disclosure, higher-layer signaling may be e.g. radio resource control (RRC) signaling; for example, is called an RRC message, e.g. including a master information block (MIB), system information, and a dedicated RRC message; or is called an RRC information element (RRC IE). The higher-layer signaling may further be e.g. Medium Access Control (MAC) signaling; or is called a MAC control element (MAC CE). However, the present disclosure is not limited thereto.

In the following descriptions, without causing confusion, a TP, a transmission point, a TRP, a transmission reception point, and a transceiver node may be used interchangeably; multiple TRPs, multiple transmission reception points (multiple TRPs), mTRP, multi-TRP, and MTRP may be used interchangeably; and multi-point joint transmission, multiple-transmission reception point coordinated transmission, and mTRP-based transmission may be used interchangeably.

In the following descriptions, "tracing/trace" and "tracking/track" may be used interchangeably.

FIG. 2 is a schematic diagram of a transmission scheme, in which (a) of FIG. 2 corresponds to a single-transmission reception point (S-TRP) scheme, (b) of FIG. 2 corresponds to a C-JT scheme, and (c) of FIG. 2 corresponds to an NC-JT scheme.

A specific distinction between a C-JT scheme and an NC-JT scheme is reflected in different mapping relationships from layers to multiple TRPs. For a C-JT scheme, all PDSCH/DMRS ports jointly transmitted from multiple TRPs, and signals from multiple TRPs, are coherently transmitted; and for an NC-JT scheme, PDSCH/DMRS ports are respectively transmitted from each TRP.

In previous standardization work, in Release 15/16 (Rel-15/16, R15/16), users perform feedback or report CSI based on a single-transmission reception point (S-TRP) scheme, in which the CSI includes a Precoding Matrix Indicator (PMI), a rank indication (RI), a layer indication (LI), and a Channel Quality Indicator (CQI), etc.

Release 17 (Rel-17, R17) supports enhancements to CSI resource configuration and reporting for an NC-JT scheme. A UE may perform joint channel measurement according to reference signals transmitted from NC-JT-based multiple transmission points (e.g., M transmission points, where M is greater than or equal to 2), and report M PMIs, M RIs, M LIs and N CQIs (N=1 for a single codeword and N=2 for dual codewords), etc. Currently, R17 only supports CSI reporting based on a 'typeI single-panel' codebook configuration.

Release 18 (Rel-18, R18) supports enhancements to CSI resource configuration and reporting for a C-JT scheme. A UE may perform joint channel measurement according to reference signals transmitted from C-JT-based multiple transmission points, and report complete CSI of one joint channel. Currently, R18 supports CSI reporting based on eTypeII and feTypeII codebook configurations.

In a C-JT scheme, each data layer will be mapped onto multiple TRPs/panels participating in coordination via weighting vectors. This scheme is equivalent to stitching multiple sub-arrays into a higher-dimensional virtual array. Therefore, a C-JT scheme is able to achieve higher beamforming /precoding/multiplexing gains and significantly improve cell-edge user throughput and cell average throughput.
(1) Currently in Rel-18 standardization process, C-JT-based transmission schemes and C-JT CSI reporting enhancements under ideal time-frequency synchronization and backhaul scenarios have been explicitly supported. A UE may perform joint channel measurement according to reference signals transmitted by C-JT transmission-based K transmission points, and jointly report a single PMI, RI, LI, and N CQIs (N=1 for a single codeword and N=2 for dual codewords), etc.
(2) PMI/precoding reporting scheme: in a C-JT transmission scheme, it is supported to calculate and jointly feed back the following precoding information based on K CSI-RS resources, and a minimum width of a frequency-domain subband for subband precoding is 2 PRBs: $w \left(i\right) = \left[\begin{matrix}{w}_{1} \left(i\right) \\ … \\ {w}_{K} \left(i\right)\end{matrix}\right] ,$ where *wₖ*(*i*) is PMI information of a k-th transmission point, 0≤k≤K.
(3) NR supports Tracking Reference Signal (TRS)-based measurement of delays and Doppler frequency offsets, in which:
a) A TRS is configured as a TRS burst. X, Y, Sₜ, and N are employed to respectively denote a length of a TRS burst, a TRS burst period, a TRS Orthogonal Frequency Division Multiplexing (TRS OFDM) symbol interval, and the number of OFDM symbols occupied by a TRS in one slot. Both X and Y are expressed using the number of slots. A time-domain structure of a TRS is designed as follows:
   for Frequence Range 1 (FR1), i.e., less than 6 GHz, X=2, Sₜ=4, and N=2; and
   for Frequence Range 2 (FR2), i.e., greater than 6 GHz, X=1 or 2, Sₜ=4, and N=2.
b) Specifically, each TRS resource is a CSI-RS resource of a single-port single-OFDM-symbol. Therefore, one CSI-RS resource set including N CSI-RS resources may be regarded as one TRS burst.
c) Legacy CSI-RS configurations such as P, SP, and AP may be supported. One CSI-RS resource setting may include K non-zero power (NZP) CSI-RS resource sets, and each CSI-RS resource set may be configured as trs-Info via RRC.
   i. One resource is one OFDM symbol, so one burst requires 2 or 4 TRSs.
d) In R15-R17, a TRS is only used by a UE for time-frequency tracking, because TRS-based CSI reporting is not supported, i.e., a report quantity is *'none'*.
e) In Rel-18, in order to enhance Doppler frequency offset measurement in high-speed mobility scenarios, NR supports time-domain correlation reporting for multiple TRS-based delay paths, primarily to reflect time-varying characteristics of different channels caused by Doppler, for example, Time Domain correlation parameter (TDCP) reporting. Table 1 shows a definition of a report quantity and a formula for calculating a report quantity.

**Table 1 Definition of a report quantity and formulas for calculating a report quantity**

| **Definition of a report quantity** | **Formulas for calculating a report quantity** |
|---|---|
| Non-zero quantized version of amplitude *A*(*t,τ* ) for a number of delay values τ (quantized amplitude vs delay) | • Normalized auto-correlation of a time series measured from a TRS resource. |
| | • Multiple auto-correlation values can be calculated from different lags of the same resource or different resources |
| Example equation | • The autocorrelation can be estimated by replacing the channel *hₙ* for subcarrier *n* in the defining formula in column 2. with the matched filter subcarrier components ${X}_{n} = {R}_{n} ⋅ {S}_{n}^{∗}$ of the received signal *Rₙ* where ${S}_{n}^{∗}$ is the complex conjugate of the known transmitted TRS signal. For *c(t,* 0) one can use the arithmetic average over the two TRS symbols separated by the time *τ*, i.e. |
| $A \left(t, τ\right) = \left\|\frac{c \left(t, τ\right)}{c \left(t, 0\right)}\right\|$ | |
| where | |
| $c \left(t, τ\right) = {\sum }_{n = 0}^{N - 1} {h}_{n} \left(t+τ\right) ⋅ {h}_{n}^{∗} \left(t\right)$ | |
| ${h}_{n} \left(t+τ\right) = {\sum }_{n = 0}^{N - 1} c \left(t+τ\right) ⋅ {h}_{n}^{□} \left(t\right)$ | $A \left(t, τ\right) \approx \frac{\left\|{\sum }_{n = 0}^{N - 1} {X}_{n} \left(t+τ\right) ⋅ {X}_{n}^{∗} \left(t\right)\right\|}{\frac{1}{2} ⋅ {\sum }_{n = 0}^{N - 1} \left({X}_{n}\left(t\right)⋅{X}_{n}^{∗}\left(t\right)+{X}_{n}\left(t+τ\right)⋅{X}_{n}^{∗}\left(t+τ\right)\right)}$ |
| | Or. alternatively. one may use the geometric average for *c*(*t,* 0), i.e. |
| and *hₙ* is the channel for subcarrier n. | $A \left(t, τ\right) \approx \frac{\left\|{\sum }_{n = 0}^{N - 1} {X}_{n} \left(t+τ\right) ⋅ {X}_{n}^{∗} \left(t\right)\right\|}{\sqrt{{\sum }_{n} {\left\|{X}_{n}\left(t+τ\right)\right\|}^{2}} \sqrt{{\sum }_{n} {\left\|{X}_{n}\left(t\right)\right\|}^{2}}}$ |
| | Further methods to remove noise bias and to suppress noise can be used. |

i. When a report quantity is 'tdcp', a CSI report configuration (CSI reportconfig) may have the following configuration:
   1. The number Y of delays: a base station may configure, via higher-layer signaling, Y ∈ {1,2,3,4} (Y>1 depends on UE capability reporting), and specific delay values of Y delay paths, i.e., {D₁, ... , D_{Y}}. If a base station configures Y, a UE expects to report an amplitude value of a TDCP report quantity. Only when Y>1, the UE may report an amplitude and a phase value of each delay path.
   2. Value D_{Y} of a delay: The configurable delay values are Dᵢ ∈ {4}_{symbols} ∪{1,2,3,4,5,6,10}ₛₗₒₜₛ , i = 1, ..., Y, where the value Dᵢ = 10 slots is restricted to subcarrier spacing configuration µ ≥ 1, the values other than Dᵢ = 10 slots are applicable to subcarrier spacing configurations µ ≥ 0, and where the values Dᵢ > D_{basic} may be configured subject to UE capability, with D_{basic} = 1 slot.
   3. For an i-th delay, a UE selects OFDM symbols of two TRSs of Dᵢ to perform measurement. For the Rel-18 TRS-based TDCP reporting, for a configured value of Y and a set of configured delay values {D1, ..., DY}, for the n-th delay Dn (n=1, ..., Y), the respective TDCP calculation is defined as wideband normalized correlation between two TRS symbols separated by Dn symbols.
   4. TDCP reporting amplitude quantization: a) a codebook table for wideband normalized amplitude value quantization, indicating N=2^{Q}, where Q=4, s=½; b) note: this does not preclude reporting of "invalid" autocorrelation values.
   5. TDCP reporting phase quantization (a phase is reported only when Y>1): a) *θ*(*D*) supports uniform quantization of 16PSK.

For a high-speed trains single-frequency network (HST-SFN) in Rel-17, two TRPs may transmit different TRS resources to perform Doppler information measurement for the two TRPs.

For a C-JT scheme in Rel-18, in order to measure channel state information such as a PMI and a CQI, a base station may be supported to configure 1, 2, 3, or 4 NZP CSI-RS resources for channel measurement within one CSI-RS resource set. A UE may measure channel state information of each TRP transmission point via each NZP CSI-RS resource for channel measurement, and feed back joint CSI to a base station.

However, in an R18 enhanced TDCP reporting scheme, K*_{TRS}* TRS resource sets may be configured to perform more time-domain measurement calculations, but an existing TRS resource configuration scheme that supports single-point transmission is still adopted within each TRS resource set, i.e., each TRS resource represents one OFDM symbol, that is, one burst may consist of 2 or 4 TRS resources.

For at least one of the above problems, embodiments of the present disclosure provide a method and an apparatus for reporting or receiving channel state information, and a communication system. In the following descriptions, if a parameter that appears is denoted by the same letter(s) as in the preceding descriptions, the meaning of the parameter is as defined in the following descriptions unless otherwise specified.

### Embodiments of a First Aspect

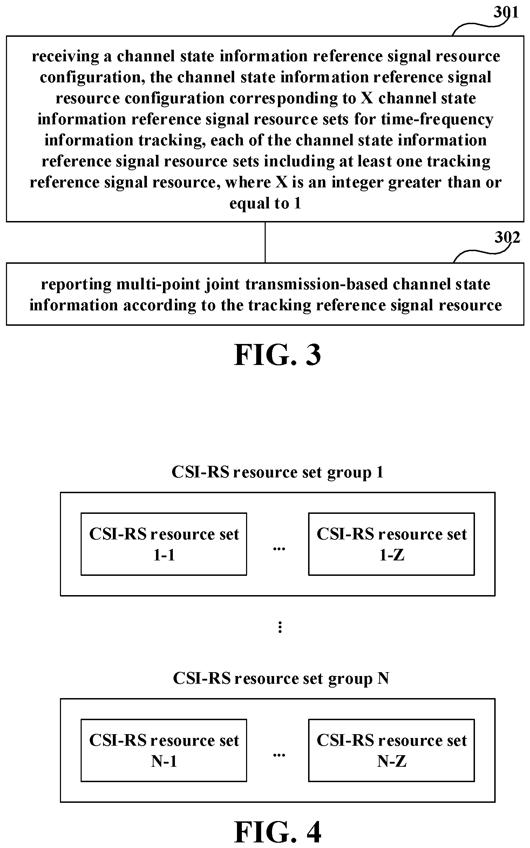

Embodiments of the present disclosure provide a method for reporting channel state information, which is described from a terminal equipment side. FIG. 3 is a schematic diagram of a method for reporting channel state information in embodiments of the present disclosure, as shown in FIG. 3, the method includes:
301, receiving a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and
302, reporting multi-point joint transmission-based channel state information according to the tracking reference signal resource.

According to the above embodiments, a terminal equipment is able to report multi-point joint transmission-based channel state information according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

It is worth noting that the above FIG. 3 only schematically describes embodiments of the present disclosure, however the present disclosure is not limited thereto. For example, an execution sequence of operations may be adjusted appropriately, moreover some other operations may be added or certain operations therein may be reduced. Those skilled in the art may make appropriate modifications according to the above contents, not being limited to records in the above FIG. 3.

In some embodiments, in multi-point joint transmission, a UE may be connected to multiple TRPs. For example, a UE is connected to N TRPs, where N is an integer greater than or equal to 2. In order to facilitate a network device to synchronize the multiple TRPs in time domain and/or frequency domain, a UE is required to report CSI related to each TRP to the network device.

The CSI may include delay information and/or frequency offset information related to each TRP. Delay information and/or frequency offset information related to each TRP may be obtained by measurement according to a TRS resource corresponding to each TRP. Therefore, when configuring TRS resources for a UE, it is necessary to respectively configure a TRS resource for each TRP, so that the UE is able to determine and report CSI information related to each TRP.

In some embodiments, if a CSI-RS resource set may be configured as trs-Info (true/enable) via RRC, the CSI-RS resource set is a TRS resource set, and includes one or more TRS resources. The TRS, as one CSI-RS, may be used for tracking time and/or frequency offsets, thereby a UE is able to continuously track and compensate for time and/or frequency offsets when receiving downlink data transmissions.

In some embodiments, a TRS resource may be configured for each TRP in various ways. The following provides exemplary descriptions of a CSI-RS resource configuration.

### Way 1:

In some embodiments, a CSI-RS resource configuration corresponds to N CSI-RS resource set groups, each CSI-RS resource set group including at least one CSI-RS resource set, where N is an integer greater than or equal to 1.

In some embodiments, N CSI-RS resource set groups may correspond one by one to N TRPs in MTRP-based transmission. That is, when a UE receives the CSI-RS resource configuration, it is default that N CSI-RS resource set groups corresponding to the CSI-RS resource configuration correspond to N TRPs one by one.

In other words, TRSs transmitted on TRS resources in each CSI-RS resource set within one CSI-RS resource set group are from one TRP. That is, TRS resources in each CSI-RS resource set group share the same QCL-TypeA information or QCL-TypeC information and/or share the same QCL-TypeD information.

The QCL-TypeA information may include {Doppler shift, Doppler spread, average delay, delay spread};
the QCL-TypeC information may include {Doppler shift, average delay}, only for frequency bands above 6GHz; and
the QCL-TypeD information may include {Spatial Rx parameter}, only for frequency bands above 6GHz.

In some embodiments, the number of CSI-RS resource sets included in each CSI-RS resource set group may be equal, where X=N*Z, Z is the number of CSI-RS resource sets included in each CSI-RS resource set group, and Z is an integer greater than or equal to 1.

FIG. 4 is a schematic diagram of a resource configuration in embodiments of the present disclosure. As shown in FIG. 4, a CSI-RS resource configuration corresponds to N CSI-RS resource set groups. Each CSI-RS resource set group includes Z CSI-RS resource sets. For example, CSI-RS resource set group 1 includes CSI-RS resource set 1-1, ..., CSI-RS resource set 1-Z, and CSI-RS resource set group N includes CSI-RS resource set N-1, ..., CSI-RS resource set N-Z, and so on.

In some embodiments, the number Z of CSI-RS resource sets included in each CSI-RS resource set group may be the number *K_{TRS}* of CSI-RS resource sets configured in an Rel-18 enhanced TDCP reporting scheme. The present disclosure is not limited thereto; Z may further be other number.

In some embodiments, the number of CSI-RS resource sets included in different CSI-RS resource set groups may be not equal, where $X = {\sum }_{i = 1}^{N} {Z}_{i}$, *Zᵢ* is the number of CSI-RS resource sets included in an i-th CSI-RS resource set group.

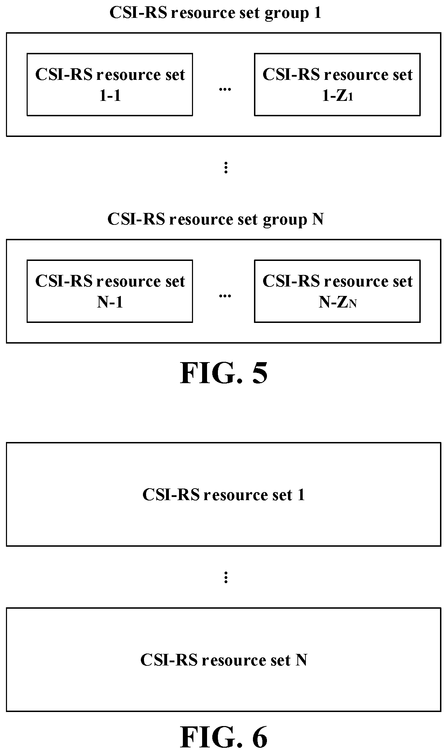

FIG. 5 is another schematic diagram of a resource configuration in embodiments of the present disclosure. As shown in FIG. 5, a CSI-RS resource configuration corresponds to N CSI-RS resource set groups. An i-th CSI-RS resource set group includes *Zᵢ* CSI-RS resource sets. For example, CSI-RS resource set group 1 includes CSI-RS resource set 1-1, ..., CSI-RS resource set 1-*Z*₁, and CSI-RS resource set group N includes CSI-RS resource set N-1, ..., CSI-RS resource set N-*Z_{N},* and so on.

In N CSI-RS resource set groups, there exists at least one CSI-RS resource set group where the number of CSI-RS resource sets included in the CSI-RS resource set group is different from the number of CSI-RS resource sets included in other CSI-RS resource set groups.

In some embodiments, in one CSI-RS resource set group, the number of TRS resources included in each CSI-RS resource set may be equal. For example, each CSI-RS resource set includes Y TRS resources. For example, Y may be 1, 2, 3, or 4, etc., or Y may further be an integer greater than 4.

The present disclosure is not limited thereto. In one CSI-RS resource set group, the number of TRS resources included in different CSI-RS resource sets may further be not equal; or, in N CSI-RS resource set groups, the number of TRS resources included in each CSI-RS resource set may be equal; or, in different CSI-RS resource set groups, the number of TRS resources included in CSI-RS resource sets may further be not equal.

In some embodiments, in 302, joint transmission mode-based CSI may be reported according to each CSI-RS resource set group. Thus, reported CSI is able to reflect an actual channel state corresponding to each TRP, which helps a network device to perform time-frequency synchronization of multiple TRPs according to the CSI.

In some embodiments, reported CSI may include M pieces of channel delay and/or frequency offset information, where M=N. That is, one piece of channel delay information, or one piece of frequency offset information, or one piece of delay information and one piece of frequency offset information is/are reported for each TRP. Delay and/or frequency offset information for one TRP is/are determined according to TRS resources in each CSI-RS resource set within a CSI-RS resource set group corresponding to the TRP.

In some embodiments, M may further be a positive integer multiple of N. That is, multiple pieces of channel delay information, or multiple pieces of frequency offset information, or multiple pieces of delay information and multiple pieces of frequency offset information are reported for each TRP. Multiple pieces of delay and/or frequency offset information for one TRP are determined according to TRS resources in each CSI-RS resource set within a CSI-RS resource set group corresponding to the TRP.

### Way 2:

In some embodiments, a CSI-RS resource configuration corresponds to X CSI-RS resource sets. The X CSI-RS resource sets may be in one-to-one correspondence with N TRPs in MTRP-based transmission, i.e., X=N, where N is an integer greater than or equal to 1. When a UE receives the CSI-RS resource configuration, it is default that X CSI-RS resource sets corresponding to the CSI-RS resource configuration correspond to N TRPs one by one.

In other words, TRSs transmitted on TRS resources in one CSI-RS resource set are from one TRP. That is, TRS resources in each CSI-RS resource set share the same QCL-TypeA information or QCL-TypeC information and/or share the same QCL-TypeD information.

FIG. 6 is another schematic diagram of a resource configuration in embodiments of the present disclosure. As shown in FIG. 6, a CSI-RS resource configuration corresponds to N CSI-RS resource sets, i.e.,, CSI-RS resource set 1, ..., CSI-RS resource set N.

In some embodiments, the number of TRS resources included in each CSI-RS resource set may be equal. For example, each CSI-RS resource set includes Y TRS resources. For example, Y may be 1, 2, 3, or 4, etc., or Y may further be an integer greater than 4. The present disclosure is not limited thereto. The number of TRS resources included in different CSI-RS resource sets may further be not equal.

In some embodiments, in 302, joint transmission mode-based channel state information may be reported according to each CSI-RS resource set. Thus, reported CSI is able to reflect an actual channel state corresponding to each TRP, which helps a network device to perform time-frequency synchronization of multiple TRPs according to the channel state information.

In some embodiments, reported CSI may include M pieces of channel delay and/or frequency offset information, where M=X. That is, one piece of channel delay information, or one piece of frequency offset information, or one piece of delay information and one piece of frequency offset information is/are reported for each TRP. Delay and/or frequency offset information for one TRP is/are determined according to TRS resources in a CSI-RS resource set corresponding to the TRP.

In some embodiments, M may further be a positive integer multiple of X. That is, multiple pieces of channel delay information, or multiple pieces of frequency offset information, or multiple pieces of delay information and multiple pieces of frequency offset information are reported for each TRP. Multiple pieces of delay and/or frequency offset information for one TRP are determined according to TRS resources in a CSI-RS resource set corresponding to the TRP.

### Way 3:

In some embodiments, a CSI-RS resource configuration corresponds to X CSI-RS resource sets, and each CSI-RS resource set includes N CSI-RS resource groups, where N is an integer greater than or equal to 1.

In some embodiments, N CSI-RS resource groups in a CSI-RS resource set may correspond one by one to N TRPs in MTRP-based transmission. That is, when a UE receives the CSI-RS resource configuration, it is default that N CSI-RS resource groups in each CSI-RS resource set corresponding to the CSI-RS resource configuration correspond to N TRPs one by one.

In other words, in one CSI-RS resource set, TRSs transmitted on TRS resources in one CSI-RS resource group are from one TRP. That is, TRS resources in each CSI-RS resource group share the same QCL-TypeA information or QCL-TypeC information and/or the same QCL-TypeD information.

Further, in each CSI-RS resource set, there is a CSI-RS resource group corresponding to the same TRP. That is, there are X CSI-RS resource groups in X CSI-RS resource sets, and TRSs transmitted on TRS resources in the X CSI-RS resource groups are from one TRP. That is, TRS resources in the X CSI-RS resource groups share the same QCL-TypeA information or QCL-TypeC information and/or the same QCL-TypeD information.

For example, a j-th CSI-RS resource group in each CSI-RS resource set corresponds to a j-th TRP, where 1≤j≤N. In other words, TRS resources in a j-th CSI-RS resource group within each CSI-RS resource set share the same QCL-TypeA information or QCL-TypeC information and/or the same QCL-TypeD information.

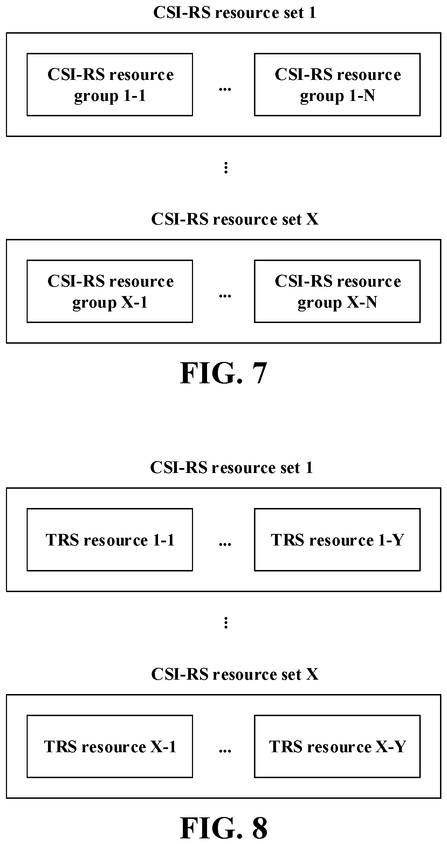

FIG. 7 is another schematic diagram of a resource configuration in embodiments of the present disclosure. As shown in FIG. 7, a CSI-RS resource configuration corresponds to X CSI-RS resource sets, each CSI-RS resource set including N CSI-RS resource groups. For example, CSI-RS resource set 1 includes CSI-RS resource group 1-1, ..., CSI-RS resource group 1-N, and CSI-RS resource set X includes CSI-RS resource group X-1, ..., CSI-RS resource group X-N.

In some embodiments, the number X of CSI-RS resource sets may be the number K*_{TRS}* of CSI-RS resource sets configured in an Rel-18 enhanced TDCP reporting scheme. The present disclosure is not limited thereto; X may further be other number.

In some embodiments, in one CSI-RS resource set, the number of TRS resources included in each CSI-RS resource group may be equal. For example, each CSI-RS resource group includes Y TRS resources. For example, Y may be 1, 2, 3, or 4, etc., or Y may further be a number greater than 4.

The present disclosure is not limited thereto. In one CSI-RS resource set, the number of TRS resources included in different CSI-RS resource groups may be not equal; or, the number of TRS resources included in each CSI-RS resource group within X CSI-RS resource sets is equal; or, the number of TRS resources included in CSI-RS resource groups of different CSI-RS resource sets is not equal.

In some embodiments, CSI-RS resource group 1-1, CSI-RS resource group 2-1, ..., CSI-RS resource group X-1 may correspond to a first TRP; CSI-RS resource group 1-2, CSI-RS resource group 2-2, ..., CSI-RS resource group X-2 may correspond to a second TRP, and so on, CSI-RS resource group 1-N, CSI-RS resource group 2-N, ..., CSI-RS resource group X-N may correspond to an N-th TRP. The present disclosure is not limited thereto. CSI-RS resource groups in each CSI-RS resource set may further correspond to TRPs in other ways.

In some embodiments, the number of TRS resources in corresponding CSI-RS resource groups within each CSI-RS resource set is the same. Corresponding CSI-RS resource groups in each CSI-RS resource set correspond to one TRP. For example, the number of TRS resources included in CSI-RS resource group 1-1, CSI-RS resource group 2-1, ..., CSI-RS resource group X-1, which correspond to a first TRP, is equal.

In some embodiments, in 302, joint transmission mode-based CSI may be reported according to corresponding CSI-RS resource groups in each CSI-RS resource set. Thus, reported CSI is able to reflect an actual channel state corresponding to each TRP, which helps a network device to perform time-frequency synchronization of multiple TRPs according to the channel state information. For example, CSI of a j-th TRP is reported according to a j-th CSI-RS resource group in each CSI-RS resource set.

In some embodiments, reported CSI may include M pieces of channel delay and/or frequency offset information, where M=N. That is, one piece of channel delay information, or one piece of frequency offset information, or one piece of delay information and one piece of frequency offset information is/are reported for each TRP. Delay and/or frequency offset information for one TRP is/are determined according to TRS resources in CSI-RS resource groups within each CSI-RS resource set corresponding to the TRP.

In some embodiments, M may further be a positive integer multiple of N. That is, multiple pieces of channel delay information, or multiple pieces of frequency offset information, or multiple pieces of delay information and multiple pieces of frequency offset information are reported for each TRP. Multiple pieces of delay and/or frequency offset information for one TRP are determined according to TRS resources in CSI-RS resource groups within each CSI-RS resource set corresponding to the TRP.

### Way 4:

In some embodiments, a CSI-RS resource configuration corresponds to X CSI-RS resource sets, and each TRS resource in each CSI-RS resource set includes N TRS resource ports, where N is an integer greater than or equal to 1.

In some embodiments, N TRS resource ports of each TRS resource may correspond one by one to N TRPs in MTRP-based transmission. That is, when a UE receives the CSI-RS resource configuration, it is default that N TRS resource ports of each TRS resource correspond to N TRPs one by one.

In other words, TRSs transmitted on corresponding TRS resource ports of each TRS resource in X CSI-RS resource sets are from one TRP. That is, corresponding TRS resource ports of each TRS resource share the same QCL-TypeA information or QCL-TypeC information and/or the same QCL-TypeD information.

For example, a k-th TRS resource port of each TRS resource corresponds to a k-th TRP, where 1≤k≤N. In other words, a k-th TRS resource port of each TRS resource shares the same QCL-TypeA information or QCL-TypeC information and/or the same QCL-TypeD information. The present disclosure is not limited thereto. TRS resource ports of each TRS resource may further correspond to TRPs in other ways.

In some embodiments, the number of TRS resources included in each CSI-RS resource set may be equal. For example, each CSI-RS resource set includes Y TRS resources. For example, Y may be 1, 2, 3, or 4, etc., or Y may further be a number greater than 4.

FIG. 8 is another schematic diagram of a resource configuration in embodiments of the present disclosure. As shown in FIG. 8, a CSI-RS resource configuration corresponds to X CSI-RS resource sets, each CSI-RS resource set including Y TRS resources. For example, CSI-RS resource set 1 includes TRS resource 1-1, ..., TRS resource 1-Y, and CSI-RS resource set X includes TRS resource X-1, ..., TRS resource X-Y. Each TRS resource includes N TRS resource ports.

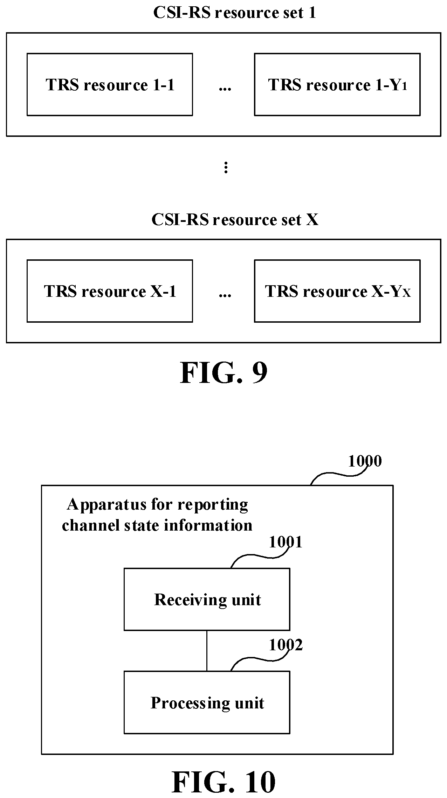

In some embodiments, the number of TRS resources included in different CSI-RS resource sets may further be not equal. FIG. 9 is another schematic diagram of a resource configuration in embodiments of the present disclosure. As shown in FIG. 9, a CSI-RS resource configuration corresponds to X CSI-RS resource sets, and a j-th CSI-RS resource set includes *Yⱼ* TRS resources. For example, CSI-RS resource set 1 includes TRS resource 1-1, ..., TRS resource 1-*Y*₁, and CSI-RS resource set X includes TRS resource X-1, ..., TRS resource X-*Y_{X}*. Each TRS resource includes N TRS resource ports.

In X CSI-RS resource sets, the number of TRS resources included in at least one CSI-RS resource set is different from the number of TRS resources included in other CSI-RS resource sets.

In some embodiments, the number X of CSI-RS resource sets may be the number *K_{TRS}* of CSI-RS resource sets configured in an Rel-18 enhanced TDCP reporting scheme. The present disclosure is not limited thereto; X may further be other number.

In some embodiments, in 302, joint transmission mode-based channel state information may be reported according to corresponding TRS resource ports of each TRS resource. Thus, reported CSI is able to reflect an actual channel state corresponding to each TRP, which helps a network device to perform time-frequency synchronization of multiple TRPs according to the channel state information. For example, CSI of a k-th TRP is reported according to a k-th TRS resource port of each TRS resource.

In some embodiments, reported CSI may include M pieces of channel delay and/or frequency offset information, where M=N. That is, one piece of channel delay information, or one piece of frequency offset information, or one piece of delay information and one piece of frequency offset information is/are reported for each TRP. Delay and/or frequency offset information for one TRP is/are determined according to TRS resource ports of each TRS resource corresponding to the TRP.

In some embodiments, M may further be a positive integer multiple of N. That is, multiple pieces of channel delay information, or multiple pieces of frequency offset information, or multiple pieces of delay information and multiple pieces of frequency offset information are reported for each TRP. Multiple pieces of delay and/or frequency offset information for one TRP are determined according to TRS resource ports of each TRS resource corresponding to the TRP.

In some embodiments, resources within each CSI-RS resource set, or each CSI-RS resource set group, or each CSI-RS resource group may be transmitted within one or more slots. In other words, a UE may expect that resources within each CSI-RS resource set, or each CSI-RS resource set group, or each CSI-RS resource group are transmitted within one or more slots.

Methods for reporting CSI in the present disclosure are described below in conjunction with specific examples.

### Implementation 1:

Step-1: A terminal side receives a CSI-RS resource configuration, which may be specifically configured via CSI-ResourceConfig in higher-layer RRC signaling. A terminal receives a configuration of a CSI-RS resource set group in a CSI-RS resource configuration. For example, via 'CSI-RS ResourceSetGroup'=4, a UE may receive 4 CSI-RS resource set groups, which represent CSI-RS resource sets transmitted by 4 transmission points.

Step-2: For each CSI-RS resource set in each CSI-RS resource set group, higher-layer RRC signaling configures it as trs_info, and the UE may identify that the current CSI-RS resource is a TRS resource for measuring time-frequency tracking information of a channel.

Step-3-1: The number of CSI-RS resource sets (which may be also called TRS resource sets) included in each CSI-RS resource set group (which may be also called a TRS resource set group) is not equal. Optionally, an i-th group includes Zi CSI-RS resource sets. For example, a first TRS resource set group includes 1 TRS resource set, a second TRS resource set group includes 3 TRS resource sets, a third TRS resource set group includes 2 TRS resource sets, and a fourth TRS resource set group includes 3 TRS resource sets.

Optionally, a value of each Zi may be configured via higher-layer signaling, with an optional range of {1, 2, 3}.

Step-3-2: The number of TRS resource sets included in each TRS resource set group is equal, and Z TRS resource sets are included. The first to fourth TRS resource set groups each include 2 TRS resource sets.

Optionally, a value of Z may be configured via higher-layer signaling, with an optional range of {1, 2, 3}.

Optionally, a value of Z may be configured via K*_{TRS}* in higher-layer signaling.

Step-4-1: The number of TRS resources included in each TRS resource set is equal, and Y TRS resources are included. For example, a first to fourth TRS resource sets each include 4 TRS resources.

Optionally, a time-domain pattern of each TRS resource is transmitted on only one OFDM symbol.

Optionally, a time-domain pattern of each TRS resource may be transmitted on multiple OFDM symbols.

Step-4-2: The number of TRS resources included in each TRS resource set is not equal, and Yi TRS resources are included. For example, first and second TRS resource sets each include 4 TRS resources. For example, third and fourth TRS resource sets each include 2 TRS resources.

Optionally, a time-domain pattern of each TRS resource is transmitted on only one OFDM symbol.

Optionally, a time-domain pattern of each TRS resource may be transmitted on multiple OFDM symbols.

Step-5: The terminal may assume that all TRS resources within each TRS resource set group may share the same QCL-TypeA/C information, and optionally, may further share the same QCL-TypeD information.

Step-6: The terminal performs measurement and reporting of delay and frequency offset information of each transmission point based on TRS resources of each TRS resource set group.

### Implementation 2:

Step-1: A terminal side receives a CSI-RS resource configuration, which may be specifically configured via CSI-ResourceConfig in higher-layer RRC signaling. A terminal receives a configuration of a CSI-RS resource set in a CSI-RS resource configuration. For example, a UE may receive 4 CSI-RS resource sets, which represent CSI-RS resource sets transmitted by 4 transmission points.

Step-2: For each CSI-RS resource set, higher-layer RRC signaling configures it as trs_info, and the UE may identify that the current CSI-RS resource is a TRS resource for measuring time-frequency tracking information of a channel.

Step-3-1: The number of TRS resources included in each CSI-RS resource set (which may also be called TRS resource set) is equal, and Y TRS resources are included. For example, a first to fourth TRS resource sets each include 4 TRS resources.

Optionally, a time-domain pattern of each TRS resource is transmitted on only one OFDM symbol.

Optionally, a time-domain pattern of each TRS resource may be transmitted on multiple OFDM symbols.

Step-3-2: The number of TRS resources included in each TRS resource set is not equal, and Yi TRS resources are included. For example, first and second TRS resource sets each include 4 TRS resources. For example, third and fourth TRS resource sets each include 2 TRS resources.

Optionally, a time-domain pattern of each TRS resource is transmitted on only one OFDM symbol.

Optionally, a time-domain pattern of each TRS resource may be transmitted on multiple OFDM symbols.

Step-4: The terminal may assume that all TRS resources within each TRS resource set may share the same QCL-TypeA/C information, and optionally, may further share the same QCL-TypeD information.

Step-5: The terminal performs measurement and reporting of delay and frequency offset information of each transmission point based on TRS resources of each TRS resource set.

### Implementation 3:

A terminal side receives a CSI-RS resource configuration, the CSI-RS resource configuration at least including X CSI-RS resource sets, each resource set being configured as 'trs_info'.

Optionally, X may be the number *K_{TRS}* of CSI-RS resource sets configured in an Rel-18 enhanced TDCP reporting scheme.

Optionally, each CSI-RS resource set includes N CSI-RS resource groups, where N is an integer greater than or equal to 1.

Optionally, each CSI-RS resource group includes an equal number of TRS resources, i.e., Y TRS resources.

Optionally, each CSI-RS resource group includes an unequal number of TRS resources.

An i-th CSI-RS resource group includes Yi TRS resources, and i is a positive integer from 1 to N.

Step-1: A terminal side receives a CSI-RS resource configuration, which may be specifically configured via CSI-ResourceConfig in higher-layer RRC signaling. A terminal receives a configuration of a CSI-RS resource set in a CSI-RS resource configuration.

Step-2: For each CSI-RS resource set, higher-layer RRC signaling configures it as trs_info, and the UE may identify that the current CSI-RS resource is a TRS resource for measuring time-frequency tracking information of a channel.

Step-3: Each CSI-RS resource set (which may also be called TRS resource set) includes N TRS resource groups, where N is an integer greater than or equal to 1.

Step-4-1: The number of TRS resources included in each TRS resource group is equal, and Y TRS resources are included. For example, a first to fourth TRS resource groups each include 4 TRS resources.

Optionally, a time-domain pattern of each TRS resource is transmitted on only one OFDM symbol.

Optionally, a time-domain pattern of each TRS resource may be transmitted on multiple OFDM symbols.

Step-4-2: The number of TRS resources included in each TRS resource group is not equal, and Yi TRS resources are included. For example, first and second TRS resource groups each include 4 TRS resources. For example, third and fourth TRS resource groups each include 2 TRS resources.

Optionally, a time-domain pattern of each TRS resource is transmitted on only one OFDM symbol.

Optionally, a time-domain pattern of each TRS resource may be transmitted on multiple OFDM symbols.

Step-5: The terminal may assume that all TRS resources within each TRS resource group may share the same QCL-TypeA/C information, and optionally, may further share the same QCL-TypeD information.

Step-6: The terminal performs measurement and reporting of delay and frequency offset information of each transmission point based on TRS resources of each TRS resource group.

### Implementation 4:

Step-1: A terminal side receives a CSI-RS resource configuration, which may be specifically configured via CSI-ResourceConfig in higher-layer RRC signaling. A terminal receives a configuration of a CSI-RS resource set in a CSI-RS resource configuration.

Step-2: For each CSI-RS resource set, higher-layer RRC signaling configures it as trs_info, and the UE may identify that the current CSI-RS resource is a TRS resource for measuring time-frequency tracking information of a channel.

Step-3: The number of TRS resources included in each CSI-RS resource set (which may also be called TRS resource set) is equal, and Y TRS resources are included. For example, a first to fourth TRS resource sets each include 4 TRS resources.

Optionally, a time-domain pattern of each TRS resource is transmitted on only one OFDM symbol.

Optionally, a time-domain pattern of each TRS resource may be transmitted on multiple OFDM symbols.

Step-4: Each TRS resource includes N TRS ports, where N is a positive integer greater than or equal to 1. For example, a first to fourth TRS resources each include 4 TRS ports.

Optionally, a time-domain pattern of each TRS resource is transmitted on only one OFDM symbol.

Optionally, a time-domain pattern of each TRS resource may be transmitted on multiple OFDM symbols.

Step-5: The terminal may assume that the same port of all TRS resources within each TRS resource set may share the same QCL-TypeA/C information, and optionally, may further share the same QCL-TypeD information.

Step-6: The terminal performs measurement and reporting of delay and frequency offset information of each transmission point based on TRS resource ports of each TRS resource set.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to the above embodiments, a terminal equipment is able to report multi-point joint transmission-based channel state information according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

### Embodiments of a Second Aspect

Embodiments of the present disclosure provide an apparatus for reporting channel state information. The apparatus e.g., may be a terminal equipment, or may be one or more components or assemblies configured in a terminal equipment, and contents same as those in embodiments of the first aspect are not elaborated.

FIG. 10 is a schematic diagram of an apparatus for reporting channel state information report in embodiments of the present disclosure. As shown in FIG. 10, an apparatus 1000 for reporting channel state information includes a receiving unit 1001 and a processing unit 1002.

The receiving unit 1001 receives a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1.

The processing unit 1002 reports multi-point joint transmission-based channel state information according to the tracking reference signal resource.

According to the above embodiments, a terminal equipment is able to report multi-point joint transmission-based channel state information according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

In some embodiments, the channel state information reference signal resource configuration corresponds to N channel state information reference signal resource set groups, each of the channel state information reference signal resource set groups including at least one of the channel state information reference signal resource sets, where N is an integer greater than or equal to 1.

In some embodiments, tracking reference signal resources in each of the channel state information reference signal resource set groups share the same QCL-TypeA or QCL-TypeC information and/or the same QCL-TypeD information.

In some embodiments, the number of channel state information reference signal resource sets included in each of the channel state information reference signal resource set groups is equal, where X=N*Z, Z is the number of channel state information reference signal resource sets included in each of the channel state information reference signal resource set groups, and Z is an integer greater than or equal to 1.

In some embodiments, the number of channel state information reference signal resource sets included in different channel state information reference signal resource set groups is not equal, where $X = {\sum }_{i = 1}^{N} {Z}_{i}$ , *Zi* is the number of channel state information reference signal resource sets included in an i-th channel state information reference signal resource set group.

In some embodiments, the processing unit 1002 reports joint transmission mode-based channel state information according to each of the channel state information reference signal resource set groups.

In some embodiments, each of the channel state information reference signal resource sets includes N channel state information reference signal resource groups, where N is an integer greater than or equal to 1.

In some embodiments, tracking reference signal resources in each of the channel state information reference signal resource groups share the same QCL-TypeA or QCL-TypeC information and/or the same QCL-TypeD information.

In some embodiments, tracking reference signal resources in a j-th channel state information reference signal resource group in each of the channel state information reference signal resource sets share the same QCL-TypeA or QCL-TypeC information and/or the same QCL-TypeD information, where 1≤j≤N.

In some embodiments, the processing unit 1002 reports joint transmission mode-based channel state information according to a corresponding channel state information reference signal resource group in each of the channel state information reference signal resource sets.

In some embodiments, the number of tracking reference signal resources in the corresponding channel state information reference signal resource groups in each of the channel state information reference signal resource sets is equal.

In some embodiments, the number of tracking reference signal resources included in each of the channel state information reference signal resource groups is equal; or
the number of tracking reference signal resources included in different channel state information reference signal resource groups is not equal.

In some embodiments, each of the tracking reference signal resources includes N tracking reference signal resource ports, where N is an integer greater than or equal to 1.

In some embodiments, a k-th tracking reference signal resource port of each of the tracking reference signal resources shares the same QCL-TypeA or QCL-TypeC information and/or the same QCL-TypeD information, where 1≤k≤N.

In some embodiments, the processing unit 1002 reports joint transmission mode-based channel state information according to the corresponding tracking reference signal resource port of each of the tracking reference signal resources.

In some embodiments, the channel state information includes M pieces of channel latency (delay) and/or frequency offset information, where M=N, or M is a positive integer multiple of N.

In some embodiments, tracking reference signal resources in each of the channel state information reference signal resource sets share the same QCL-TypeA or QCL-TypeC information and/or the same QCL-TypeD information.

In some embodiments, the processing unit 1002 reports joint transmission mode-based channel state information according to each of the channel state information reference signal resource sets.

In some embodiments, the channel state information includes M pieces of channel latency and/or frequency offset information, where M=X, or M is a positive integer multiple of X.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The apparatus 1000 for reporting channel state information may further include other components or modules. For detailed contents of these components or modules, relevant technologies may be referred to.

Moreover, for simplicity, FIG. 10 only exemplarily shows a connection relationship or signal flow between components or modules, however those skilled in the art should know that various relevant technologies such as bus connection may be used. Each of the above components or modules may be implemented via a hardware facility such as a processor, a memory, a transmitter, a receiver, etc. Embodiments of the present disclosure do not impose limitations thereto.

According to the above embodiments, a terminal equipment is able to report multi-point joint transmission-based channel state information according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

### Embodiments of a Third Aspect

Embodiments of the present disclosure provide a method for receiving channel state information, which is described from a network device side. Contents same as those in embodiments of the first aspect are not repeated.

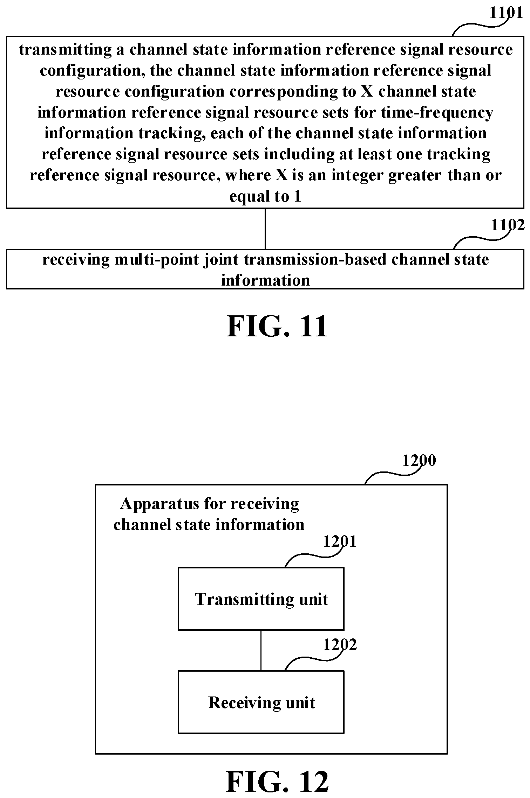

FIG. 11 is a schematic diagram of a method for receiving channel state information in embodiments of the present disclosure, as shown in FIG. 11, the method includes:
1101, transmitting a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and
1102, receiving multi-point joint transmission-based channel state information.

According to the above embodiments, a network device is able to receive multi-point joint transmission-based channel state information calculated according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

It is worth noting that the above FIG. 11 only schematically describes embodiments of the present disclosure, however the present disclosure is not limited thereto. For example, an execution sequence of operations may be adjusted appropriately, moreover some other operations may be added or certain operations therein may be reduced. Those skilled in the art may make appropriate modifications according to the above contents, not being limited to records in the above FIG. 11.

In some embodiments, the channel state information reference signal resource configuration corresponds to N channel state information reference signal resource set groups, each of the channel state information reference signal resource set groups including at least one of the channel state information reference signal resource sets, where N is an integer greater than or equal to 1.

In some embodiments, tracking reference signal resources in each of the channel state information reference signal resource set groups share the same QCL-TypeA or QCL-TypeC information and/or the same QCL-TypeD information.

In some embodiments, the number of channel state information reference signal resource sets included in each of the channel state information reference signal resource set groups is equal, where X=N*Z, Z is the number of channel state information reference signal resource sets included in each of the channel state information reference signal resource set groups, and Z is an integer greater than or equal to 1.

In some embodiments, the number of channel state information reference signal resource sets included in different channel state information reference signal resource set groups is not equal, where $X = {\sum }_{i = 1}^{N} {Z}_{i}$, *Zᵢ* is the number of channel state information reference signal resource sets included in an i-th channel state information reference signal resource set group.

In some embodiments, joint transmission mode-based channel state information is determined according to each of the channel state information reference signal resource set groups.

In some embodiments, each of the channel state information reference signal resource sets includes N channel state information reference signal resource groups, where N is an integer greater than or equal to 1.

In some embodiments, tracking reference signal resources in each of the channel state information reference signal resource groups share the same QCL-TypeA or QCL-TypeC information and/or the same QCL-TypeD information.

In some embodiments, tracking reference signal resources in a j-th channel state information reference signal resource group in each of the channel state information reference signal resource sets share the same QCL-TypeA or QCL-TypeC information and/or the same QCL-TypeD information, where 1≤j≤N.

In some embodiments, joint transmission mode-based channel state information is determined according to the corresponding channel state information reference signal resource groups in each of the channel state information reference signal resource sets.

In some embodiments, the number of tracking reference signal resources in the corresponding channel state information reference signal resource groups in each of the channel state information reference signal resource sets is equal.

In some embodiments, the number of tracking reference signal resources included in each of the channel state information reference signal resource groups is equal; or the number of tracking reference signal resources included in different channel state information reference signal resource groups is not equal.

In some embodiments, each of the tracking reference signal resources includes N tracking reference signal resource ports, where N is an integer greater than or equal to 1.

In some embodiments, a k-th tracking reference signal resource port of each of the tracking reference signal resources shares the same QCL-TypeA or QCL-TypeC information and/or the same QCL-TypeD information, where 1≤k≤N.

In some embodiments, joint transmission mode-based channel state information is determined according to the corresponding tracking reference signal resource port of each of the tracking reference signal resources.

In some embodiments, the channel state information includes M pieces of channel latency and/or frequency offset information, where M=N, or M is a positive integer multiple of N.

In some embodiments, tracking reference signal resources in each of the channel state information reference signal resource sets share the same QCL-TypeA or QCL-TypeC information and/or the same QCL-TypeD information.

In some embodiments, joint transmission mode-based channel state information is determined according to each of the channel state information reference signal resource sets.

In some embodiments, the channel state information includes M pieces of channel latency and/or frequency offset information, where M=X, or M is a positive integer multiple of X.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to the above embodiments, a network device is able to receive multi-point joint transmission-based channel state information calculated according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

### Embodiments of a Fourth Aspect

Embodiments of the present disclosure provide an apparatus for receiving channel state information. The apparatus may be a network device, or may be one or more components or assemblies configured in a network device. Contents same as those in embodiments of the third aspect are not further elaborated.

FIG. 12 is a schematic diagram of an apparatus for receiving channel state information in embodiments of the present disclosure. As shown in FIG. 12, an apparatus 1200 for receiving channel state information includes a transmitting unit 1201 and a receiving unit 1202.

The transmitting unit 1201 transmits a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and the receiving unit 1202 receives multi-point joint transmission-based channel state information.

According to the above embodiments, a network device is able to receive multi-point joint transmission-based channel state information calculated according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

In some embodiments, the channel state information reference signal resource configuration corresponds to N channel state information reference signal resource set groups, each of the channel state information reference signal resource set groups including at least one of the channel state information reference signal resource sets, where N is an integer greater than or equal to 1.

In some embodiments, tracking reference signal resources in each of the channel state information reference signal resource set groups share the same QCL-TypeA or QCL-TypeC information and/or the same QCL-TypeD information.

In some embodiments, the number of channel state information reference signal resource sets included in each of the channel state information reference signal resource set groups is equal, where X=N*Z, Z is the number of channel state information reference signal resource sets included in each of the channel state information reference signal resource set groups, and Z is an integer greater than or equal to 1.

In some embodiments, the number of channel state information reference signal resource sets included in different channel state information reference signal resource set groups is not equal, where $X = {\sum }_{i = 1}^{N} {Z}_{i}$, *Zᵢ* is the number of channel state information reference signal resource sets included in an i-th channel state information reference signal resource set group.

In some embodiments, joint transmission mode-based channel state information is determined according to each of the channel state information reference signal resource set groups.

In some embodiments, each of the channel state information reference signal resource sets includes N channel state information reference signal resource groups, where N is an integer greater than or equal to 1.

In some embodiments, tracking reference signal resources in each of the channel state information reference signal resource groups share the same QCL-TypeA or QCL-TypeC information and/or the same QCL-TypeD information.

In some embodiments, tracking reference signal resources in a j-th channel state information reference signal resource group in each of the channel state information reference signal resource sets share the same QCL-TypeA or QCL-TypeC information and/or the same QCL-TypeD information, where 1≤j≤N.

In some embodiments, joint transmission mode-based channel state information is determined according to the corresponding channel state information reference signal resource groups in each of the channel state information reference signal resource sets.

In some embodiments, the number of tracking reference signal resources in the corresponding channel state information reference signal resource groups in each of the channel state information reference signal resource sets is equal.

In some embodiments, the number of tracking reference signal resources included in each of the channel state information reference signal resource groups is equal; or the number of tracking reference signal resources included in different channel state information reference signal resource groups is not equal.

In some embodiments, each of the tracking reference signal resources includes N tracking reference signal resource ports, where N is an integer greater than or equal to 1.

In some embodiments, a k-th tracking reference signal resource port of each of the tracking reference signal resources shares the same QCL-TypeA or QCL-TypeC information and/or the same QCL-TypeD information, where 1≤k≤N.

In some embodiments, joint transmission mode-based channel state information is determined according to the corresponding tracking reference signal resource port of each of the tracking reference signal resources.

In some embodiments, the channel state information includes M pieces of channel latency and/or frequency offset information, where M=N, or M is a positive integer multiple of N.

In some embodiments, tracking reference signal resources in each of the channel state information reference signal resource sets share the same QCL-TypeA or QCL-TypeC information and/or the same QCL-TypeD information.

In some embodiments, joint transmission mode-based channel state information is determined according to each of the channel state information reference signal resource sets.

In some embodiments, the channel state information includes M pieces of channel latency and/or frequency offset information, where M=X, or M is a positive integer multiple of X.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The apparatus 1200 for receiving channel state information may further include other components or modules. For detailed contents of these components or modules, relevant technologies may be referred to.

Moreover, for simplicity, FIG. 12 only exemplarily shows a connection relationship or signal flow between components or modules, however those skilled in the art should know that various relevant technologies such as bus connection may be used. Each of the above components or modules may be implemented via a hardware facility such as a processor, a memory, a transmitter, a receiver, etc. Embodiments of the present disclosure do not impose limitations thereto.

According to the above embodiments, a network device is able to receive multi-point joint transmission-based channel state information calculated according to a tracking reference signal resource in a channel state information reference signal resource set for time-frequency information tracking, which helps a network device perform M-TRP time-frequency synchronization according to the channel state information, thereby being able to improving transmission efficiency, enhancing data transmission performance, and increasing single-user and network overall throughput.

### Embodiments of a Fifth Aspect

Embodiments of the present disclosure further provide a communication system, FIG.1 may be referred to, contents same as those in embodiments of the first to fourth aspects are not repeated.

In some implementations, a communication system 100 at least may include: a network device and a terminal equipment. the network device transmits a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and receives multi-point joint transmission-based channel state information. The terminal equipment receives the channel state information reference signal resource configuration, and reports the channel state information based on the tracking reference signal resource.

Embodiments of the present disclosure further provide a network device, for example it may be a base station, but the present disclosure is not limited thereto, or it may further be other network device.

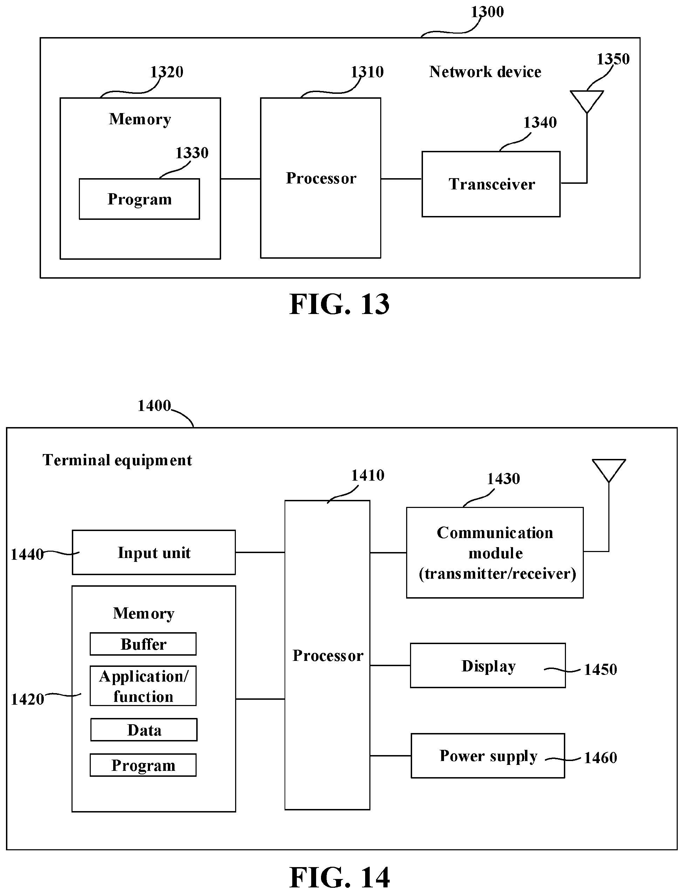

FIG. 13 is a composition schematic diagram of a network device in embodiments of the present disclosure. As shown in FIG. 13, a network device 1300 may include: a processor 1310 (such as a central processing unit (CPU)) and a memory 1320; the memory 1320 is coupled to the processor 1310. The memory 1320 may store various data; moreover, further stores a program 1330 for information processing, and executes the program 1330 under the control of the processor 1310.

For example, the processor 1310 may be configured to execute a program to implement operations of a network device in the method according to embodiments of the third aspect. For example, the processor 1310 may be configured to perform the following control: transmitting a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and receiving multi-point joint transmission-based channel state information.

In addition, as shown in FIG. 13, the network device 1300 may further include a transceiver 1340 and an antenna 1350, etc., wherein functions of said components are similar to related arts and are not further elaborated here. It is worth noting that the network device 1300 does not have to include all the components shown in FIG. 13. Moreover, the network device 1300 may further include components not shown in FIG. 13, relevant technologies may be referred to.

Embodiments of the present disclosure further provide a terminal equipment, but the present disclosure is not limited thereto, it may further be other device.

FIG. 14 is a schematic diagram of a terminal equipment in embodiments of the present disclosure. As shown in FIG. 14, the terminal equipment 1400 may include a processor 1410 and a memory 1420; the memory 1420 stores data and programs, and is coupled to the processor 1410. It is worth noting that this figure is exemplary, other types of structures may also be used to supplement or replace this structure, to implement a telecommunication function or other functions.

For example, the processor 1410 may be configured to execute a program to implement the method as described in the embodiments of the first aspect. For example, the processor 1410 may be configured to perform the following control: receiving a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and reporting multi-point joint transmission-based channel state information according to the tracking reference signal resource.

As shown in FIG. 14, the terminal equipment 1400 may further include: a communication module 1430, an input unit 1440, a display 1450, and a power supply 1460. Functions of the above components are similar to related arts, and are not further elaborated here. It is worth noting that the terminal equipment 1400 does not have to include all components shown in FIG. 14, the above components are not indispensable. Moreover, the terminal equipment 1400 may further include components not shown in FIG. 14, and relevant technologies may be referred to.

Embodiments of the present disclosure further provide a computer program, wherein when the program is executed in a terminal equipment, the program enables the terminal equipment to execute the method described in embodiments of the first aspect.

Embodiments of the present disclosure further provide a storage medium in which a computer program is stored, wherein the computer program enables a terminal equipment to execute the method described in embodiments of the first aspect.

Embodiments of the present disclosure further provide a computer program, wherein when a network device executes the program, the program enables the network device to execute the method described in embodiments of the third aspect.

Embodiments of the present disclosure further provide a storage medium in which a computer program is stored, wherein the computer program enables a network device to execute the method described in embodiments of the third aspect.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Those skilled in the art may make various variations and amendments to the present disclosure according to principles of the present disclosure, these variations and amendments are also within scopes of the present disclosure.

As for implementations including the above embodiments, the following supplements are further disclosed:
Supplement 1. A method for reporting channel state information, applicable to a terminal equipment, the method including:
   receiving a channel state information reference signal resource configuration, the channel state information reference signal resource configuration corresponding to X channel state information reference signal resource sets for time-frequency information tracking, each of the channel state information reference signal resource sets including at least one tracking reference signal resource, where X is an integer greater than or equal to 1; and
   reporting multi-point joint transmission-based channel state information according to the tracking reference signal resource.
Supplement 2. The method according to supplement 1, wherein
   the channel state information reference signal resource configuration corresponds to N channel state information reference signal resource set groups, each of the channel state information reference signal resource set groups including at least one of the channel state information reference signal resource sets, where N is an integer greater than or equal to 1.
Supplement 3. The method according to supplement 2, wherein,
   tracking reference signal resources in each of the channel state information reference signal resource set groups share the same QCL-TypeA or QCL-TypeC information and/or the same QCL-TypeD information.
Supplement 4. The method according to supplement 2, wherein,
   joint transmission mode-based channel state information is reported according to each of the channel state information reference signal resource set groups.
Supplement 5. The method according to supplement 1, wherein,
   each of the channel state information reference signal resource sets includes N channel state information reference signal resource groups, where N is an integer greater than or equal to 1.
Supplement 6. The method according to supplement 5, wherein
   tracking reference signal resources in each of the channel state information reference signal resource groups share the same QCL-TypeA or QCL-TypeC information and/or the same QCL-TypeD information.
Supplement 7. The method according to supplement 5, wherein
   joint transmission mode-based channel state information is reported according to a corresponding channel state information reference signal resource group in each of the channel state information reference signal resource sets.
Supplement 8. The method according to supplement 1, wherein
   each of the tracking reference signal resources includes N tracking reference signal resource ports, where N is an integer greater than or equal to 1.
Supplement 9. The method according to supplement 8, wherein
   a k-th tracking reference signal resource port of each of the tracking reference signal resources shares the same QCL-TypeA or QCL-TypeC information and/or the same QCL-TypeD information, where 1≤k≤N.
Supplement 10. The method according to supplement 8, wherein
   joint transmission mode-based channel state information is reported according to the corresponding tracking reference signal resource port of each of the tracking reference signal resources.

## Claims

1. An apparatus for reporting channel state information, configured in a terminal equipment, the apparatus comprising:
a receiving unit configured to receive a channel state information reference signal resource configuration, the channel state information reference signal resource configuration corresponding to X channel state information reference signal resource sets for time-frequency information tracking, each of the channel state information reference signal resource sets comprising one or more tracking reference signal resources, where X is an integer greater than or equal to 1; and
a processing unit configured to report multi-point joint transmission-based channel state information according to the tracking reference signal resources.

2. The apparatus according to claim 1, wherein,
the channel state information reference signal resource configuration corresponds to N channel state information reference signal resource set groups, each of the channel state information reference signal resource set groups comprising at least one of the channel state information reference signal resource sets, where N is an integer greater than or equal to 1.

3. The apparatus according to claim 2, wherein,
tracking reference signal resources in each of the channel state information reference signal resource set groups share the same QCL-TypeA or QCL-TypeC information and/or the same QCL-TypeD information.

4. The apparatus according to claim 2, wherein,
the number of channel state information reference signal resource sets comprised in each of the channel state information reference signal resource set groups is equal, where X=N*Z, Z is the number of channel state information reference signal resource sets comprised in each of the channel state information reference signal resource set groups, and Z is an integer greater than or equal to 1; or
the number of channel state information reference signal resource sets comprised in different channel state information reference signal resource set groups is not equal, where $X = {\sum }_{i = 1}^{N} {Z}_{i}$, *Zᵢ* is the number of channel state information reference signal resource sets comprised in an i-th channel state information reference signal resource set group.

5. The apparatus according to claim 2, wherein,
the processing unit is configured to report joint transmission mode-based channel state information according to each of the channel state information reference signal resource set groups.

6. The apparatus according to claim 1, wherein,
each of the channel state information reference signal resource sets comprises N channel state information reference signal resource groups, where N is an integer greater than or equal to 1.

7. The apparatus according to claim 6, wherein,
tracking reference signal resources in each of the channel state information reference signal resource groups share the same QCL-TypeA or QCL-TypeC information and/or the same QCL-TypeD information.

8. The apparatus according to claim 6, wherein,
tracking reference signal resources in a j-th channel state information reference signal resource group in each of the channel state information reference signal resource sets share the same QCL-TypeA or QCL-TypeC information and/or the same QCL-TypeD information, where 1≤j≤N.

9. The apparatus according to claim 6, wherein,
the processing unit is configured to report joint transmission mode-based channel state information according to a corresponding channel state information reference signal resource group in each of the channel state information reference signal resource sets.

10. The apparatus according to claim 6, wherein,
the number of tracking reference signal resources in the corresponding channel state information reference signal resource groups in each of the channel state information reference signal resource sets is equal.

11. The apparatus according to claim 6, wherein,
the number of tracking reference signal resources comprised in each of the channel state information reference signal resource groups is equal; or
the number of tracking reference signal resources comprised in different channel state information reference signal resource groups is not equal.

12. The apparatus according to claim 1, wherein,
each of the tracking reference signal resources comprises N tracking reference signal resource ports, where N is an integer greater than or equal to 1.

13. The apparatus according to claim 12, wherein,
a k-th tracking reference signal resource port of each of the tracking reference signal resources shares the same QCL-TypeA or QCL-TypeC information and/or the same QCL-TypeD information, where 1≤k≤N.

14. The apparatus according to claim 12, wherein,
the processing unit is configured to report joint transmission mode-based channel state information according to the corresponding tracking reference signal resource port of each of the tracking reference signal resources.

15. The apparatus according to any one of claims 2, 6 and 12, wherein,
the channel state information comprises M pieces of channel delay and/or frequency offset information, where M=N, or M is a positive integer multiple of N.

16. The apparatus according to claim 1, wherein,
tracking reference signal resources in each of the channel state information reference signal resource sets share the same QCL-TypeA or QCL-TypeC information and/or the same QCL-TypeD information.

17. The apparatus according to claim 16, wherein,
the processing unit is configured to report joint transmission mode-based channel state information according to each of the channel state information reference signal resource sets.

18. The apparatus according to claim 17, wherein,
the channel state information comprises M pieces of channel delay and/or frequency offset information, where M=X, or M is a positive integer multiple of X.

19. An apparatus for receiving channel state information, configured in a network device, the apparatus comprising:
a transmitting unit configured to transmit a channel state information reference signal resource configuration, the channel state information reference signal resource configuration corresponding to X channel state information reference signal resource sets for time-frequency information tracking, each of the channel state information reference signal resource sets comprising one or more tracking reference signal resources, where X is an integer greater than or equal to 1; and
a receiving unit configured to receive multi-point joint transmission-based channel state information.

20. A communication system, comprising a network device and a terminal equipment, wherein,
the network device transmits a channel state information reference signal resource configuration, the channel state information reference signal resource configuration corresponding to X channel state information reference signal resource sets for time-frequency information tracking, each of the channel state information reference signal resource sets comprising one or more tracking reference signal resources, where X is an integer greater than or equal to 1; and receives multi-point joint transmission-based channel state information; and
the terminal equipment receives the channel state information reference signal resource configuration, and reports the channel state information based on the tracking reference signal resources.
